# EUROPÄISCHE PATENTSCHRIFT

(11) **EP 2 209 034 B1**
(45) Veröffentlichungstag und Bekanntmachung des Hinweises auf die Patenterteilung: **13.02.2013**
(21) Anmeldenummer: 09150515.6
(22) Anmeldetag: 14.01.2009
(51) Int. Cl.: G02B 7/02, G02B 7/00

(54) **Optisches Bauteil**
Optical component
Composant optique

(43) Veröffentlichungstag der Anmeldung: 21.07.2010
(73) Patentinhaber: Qioptiq Photonics GmbH & Co. KG, 37081 Göttingen (DE)
(72) Erfinder: Grimminger, Dieter, 81671 München (DE); Holzer, Andreas, 82223 Eichenau (DE); Riegg, Gerhard, 81377 München (DE)
(74) Vertreter: Wagner, Carsten

(56) Entgegenhaltungen:
- EP-A- 1 024 386
- DE-A1- 19 623 418
- US-A- 5 024 509
- US-A- 5 608 579

## Beschreibung

Die Erfindung betrifft ein optisches Bauteil nach dem Oberbegriff von Anspruch 1.

Derartige, optische Bauteile, wie gefasste Spiegel, Prismen oder Linsen werden in optischen Geräten aller Art, wie beispielsweise Objektiven für unterschiedliche Anwendungen, z. B. in der Medizintechnik verwendet. Dabei sollen Lichtstrahlen in verschiedener Weise beeinflusst, also fokussiert, gelenkt oder umgelenkt werden.

Gerade im Bereich hochpräziser Optiken ist es wichtig aber auch problematisch, die Positionsgenauigkeit montierter optischer Bauteile in dem optischen Gerät ausreichend exakt zu gewährleisten. Dies wird maßgeblich durch die Passgenauigkeit der optischen Elemente in der Fassung gegeben, kann aber durch Temperaturschwankungen oder dynamische Belastungen beeinträchtigt werden. Einerseits muss nämlich dem optischen Element genügend Spielraum in der Fassung gegeben werden, so dass das optische Element bei einer Temperaturänderung, die zu einer Ausdehnung des optischen Elements führt, die kleiner als die Ausdehnung der Fassung ist, nicht unter Spannung gerät. Andererseits muss das optische Element aber so eng in der Fassung gehalten werden, dass es bei allen zulässigen Temperaturänderungen nicht aus seiner zentrierten Lage ausgerückt wird. Ein Optimum im Spielraum zwischen Fassung und optischem Element zu finden ist daher extrem schwer.

Dieses Problem konnte zum Teil dadurch entschärft werden, dass an dem gefassten Rand der optischen Elemente Rippen aus einem hochelastischen Material wie Silikonkautschuk angebracht wurden. Bei dem Einbringen der optischen Elemente in die Fassung werden die Rippen zusammengedrückt. Da die Rippen gleichmäßig von allen Seiten auf die Fassung drücken, wird das optische Element zentriert in der Mitte der Fassung gehalten. Auch bei einer Vergrößerung oder Verkleinerung des Spalts zwischen dem optischen Element und der Fassung durch eine Temperaturänderung beleibt das optische Element immer in zentrierter Position zu der Fassung.

Es hat sich jedoch herausgestellt, dass diese Art der Zentrierung nur ab einer bestimmten Größe des optischen Elements möglich ist. So wurde beispielsweise herausgefunden, dass bei einem Durchmessers des optischen Elements von weniger als 10 mm die Rippen nicht mehr mit der notwendigen Präzision aufgebracht werden können. Auch hat sich ergeben, dass die Rippen beim Einbringen des optischen Elements in die Fassung leicht abgeschert werden oder sich von dem optischen Element ablösen.

Der Erfindung liegt die Aufgabe zugrunde, ein optisches Bauteil nach dem Oberbegriff von Anspruch 1 bereit zu stellen, bei dem auch optische Elemente mit einem Durchmesser von weniger als 10 mm zentriert in eine Fassung eingesetzt und auch bei Temperaturschwankungen sicher in der zentrierten Stellung gehalten werden können.

Gelöst wird die Aufgabe gemäß der Erfindung durch ein optisches Bauteil mit den Merkmalen von Anspruch 1. Erfindungsgemäß sind die Zentrierelemente, die in dem Spalt zwischen dem optischen Element und der Fassung vorgesehen sind, punktförmig ausgebildet. Punktförmige Zentrierelemente können in einer sehr geringen Größe gefertigt werden und eignen sich daher hervorragend für kleine optische Bauteile. Auch lassen sich die punktförmigen Zentrierelemente sehr exakt platzieren, so dass eine gute Zentrierwirkung gewährleistet werden kann.

Die Zentrierelemente befinden sich bei Raumtemperatur in einem komprimierten Zustand und können dadurch Temperaturschwankungen nach oben und unten ausgleichen. Da sich bei einer Temperaturerhöhung über die Raumtemperatur die Fassung stärker ausdehnt als das optische Element, vergrößert sich der Spalt zwischen dem optischen Element und der Fassung. Diese Vergrößerung kann durch die Entspannung der komprimierten Zentrierelemente ausgeglichen werden. Bei einer Abkühlung unter die Raumtemperatur verringert sich dagegen der Spalt zwischen dem optischen Element und der Fassung. Aber auch diese Änderung kann durch eine noch stärkere Komprimierung der Zentrierelemente egalisiert werden, ohne dass dabei Spannungen von der Fassung auf das optische Element übertragen werden.

Vorteilhafterweise sind die Zentrierelemente kugelsegmentförmig gestaltet. Durch diese Form entsteht eine ausgezeichnete Verbindung mit dem Untergrund, da im Vergleich mit der Höhe der Zentrierelemente eine verhältnismäßig große Fläche als Verbindungsfläche dient. Andererseits treten beim Einbringen des optischen Elements in die Fassung nur geringe Scherkräfte auf, da die Kugelsegmente nur eine geringe Angriffsfläche dafür bieten.

Die erfindungsgemäßen Zentrierelemente eignen sich insbesondere für sehr kleine optische Elemente -beispielsweise kleine Linsen- und weisen für einen solchen Einsatz vorteilhaft einen Durchmesser von weniger als einem Millimeter auf. Zentrierelemente von dieser Größe können bei optischen Elementen mit einem Durchmesser von weniger als zehn Millimeter mit hoher Präzision eingesetzt werden. Die erfindungsgemäßen Zentrierelemente sind jedoch ebenfalls für größere optische Elemente geeignet. Hier kann dann ein größerer Durchmesser für die Zentrierelemente gewählt werden.

Vorteilhaft steht die Höhe der Zentrierelemente zu deren Durchmesser im Verhältnis 1 zu 4 bis 1 zu 15. Bei einem Verhältnis oberhalb von 1 zu 15 würde die Höhe der Zentrierelemente in einem Bereich liegen, der herstelltechnisch kaum noch reproduzierbar beherrscht werden könnte. Bei einem Verhältnis unterhalb von 1 zu 4 hätte die Außenkontur der Zentrierelemente eine Steilheit, die beim Einsetzen des optischen Elements in die Fassung zu sehr hohen Scherkräften führen würde. Dies könnte zu einer Beschädigung von Zentrierelementen oder sogar zum vollständigen Abscheren führen. Idealerweise liegt das Verhältnis zwischen 1 zu 8 und 1 zu 11.

Die Zentrierelemente können grundsätzlich an der Innenseite der Fassung angebracht sein. Bei diesem Ausführungsbeispiel ist immer eine gute Haftung der Zentrierelemente gewährleistet, für die Fassung in den meisten Fällen Aluminium verwendet wird. Die Haftung auf Glas ist dagegen geringer. Bei der Aufbringung der Zentrierelemente nur die relativ unempfindlichen Fassungen und nicht etwa die optischen Elemente gehandhabt werden.

Es hängt jedoch von dem verwendeten Verfahren zum Aufbringen der Zentrierelemente und der Größe der optischen Elemente ab, ob die Anbringung an der Fassung vorteilhaft ist. Insbesondere bei sehr kleinen Fassungen zur Aufnahme der optischen Elemente kann das Aufbringen der Zentrierelemente an der Innenseite der Fassung problematisch werden. In diesem Fall können die Zentrierelemente problemlos am Außenumfang des optischen Elements angebracht sein.

Insbesondere bei der Verwendung von Kunststofflinsen können die Zentrierelemente einstückig mit der Linse selbst gefertigt sein. In diesem Fall ist davon auszugehen, dass die Elastizität der Zentrierelemente nur gering ist. Der Spalt zwischen Linse und Fassung darf daher keine großen Toleranzen aufweisen, da ansonsten entweder die auf die Zentrierelemente einwirkenden Scherkräfte beim Einpassen der Linse in die Fassung, zu groß werden, oder aber keine Zentrierwirkung mehr gewährleistet werden kann.

Die Zentrierelemente können aber auch auf das bereits fertige optische Element aufgebracht werden. In diesem Fall kann für die Zentrierelemente ein Material höherer Elastizität verwendet werden. Da sich solche Zentrierelemente besser elastisch verformen lassen, können auch die Anforderungen an die Maße des Spalts zwischen optischen Element und Fassung geringer sein.

Eine gute elastische Verformbarkeit wird durch eine Reihe von Kunststoffen gewährleistet. Aus diesem Grund sollte als Material für die Zentrierelemente auch dann Kunststoff verwendet werden, wenn die optischen Elemente selbst, beispielsweise aus Glas, gefertigt sind.

Vorteilhaft wird als Kunststoff ein reaktionsvernetzendes Polymer,wie z. B. Acrylat-oder Silikon-Klebstoff eingesetzt. Diese Klebstoffe lassen sich gut verarbeiten und können dann zu Zentrierelementen ausgehärtet werden, die die notwendige elastische Verformbarkeit aufweisen und gleichzeitig eine hervorragende Haftung zu dem optischen Bauteil gewährleisten.

Die Zentrierelemente weisen bei Raumtemperatur eine Shorehärte zwischen A20 und D60 auf. Bei dieser Härte ist gewährleistet, dass es nicht zum Abscheren der Zentrierelemente beim Einführen des optischen Elements in die Fassung kommt. Auch werden bei diesem Härtegrad bei einer Abkühlung des optischen Bauteils noch keine Spannungen von der Fassung auf das optische Element übertragen. Andererseits ist trotzdem eine ausreichende Stützkraft gewährleistet, die das optische Element in zentrierter Position hält. Idealerweise weisen die Zentrierelemente in Abhängigkeit von ihrer Anzahl und Größe eine Shorehärte zwischen A30 und D60 auf.

Bei einem Ausführungsbeispiel des optischen Bauteils sind die Zentrierelemente berührend auf dem Außenumfang des optischen Elements aufgebracht. Hierfür sind Präzisionsdosierer bekannt geworden, die den flüssigen oder pastösen Kunststoff mit einer Dosiernadel auf den Untergrund aufbringen. Mit solchen Dosiernadeln lassen sich recht braquchbare Ergebnisse bei der Applikation der Zentrierelemente auf ein optisches Element erzielen, dessen Durchmesser ca. 10 mm beträgt.

Noch größere Vorteile lassen sich jedoch erzielen, wenn die Zentrierelemente berührungslos auf den Außenumfang des optischen Elements aufgebracht werden. Diese Technik hat sich ganz allgemein beim Aufbringen kleinster Mengen eines viskosen Materials auf einen festen Untergrund in den letzten Jahren hervorgetan. Mit diesem Verfahren kann eine Vielzahl von unterschiedlichen Materialien mit unterschiedlichsten Dosiermustern problemlos appliziert werden. Darüber hinaus werden auch Probleme eliminiert, die durch die Verwendung von Dosiernadeln entstehen können. So kann es beispielsweise bei der berührungslosen Applikation, nicht mehr zu einer Verschleppung, Beschädigung oder Kontamination kommen.

Besonders vorteilhaft sind die Zentrierelemente mit einem Jetventil auf den Umfang des optischen Elements aufgebracht. Bei einem Jetventil ist üblicherweise ein Stößel vorgesehen, der ein Austrittsventil verschließt. Beim Anheben des Stößels fließt Material in das Austrittsventil, tritt aber - bedingt durch die Kapillarwirkung - noch nicht aus. Erst wenn der Stößel mit hoher Geschwindigkeit wieder nach unten bewegt wird, wird ein Tropfen des Materials aus der Ventilöffnung hinausgeschleudert. Der Antrieb des Stößels erfolgt oft piezoelektrisch. Mit entsprechenden Systemen lassen sich Dosiergenauigkeiten von ± 1 mg erreichen. Die so erzeugten Zentrierelemente sind folglich sehr gleichmäßig und können ihre Zentrieraufgabe bestens wahrnehmen.

Erfindungsgemäß ist das optische Element, mit den daran angebrachten Zentrierelementen, minimal größer als die an die Außenkontur des optischen Elements angepasste Öffnung der Fassung. Am Beispiel einer runden Linse erläutert, bedeutet dies, dass ein Außenkreis, der um die Spitzen der Zentrierelemente gelegt wird, einen etwas größeren Durchmesser aufweist als der Innendurchmesser der Fassung. Die Zentrierelemente stützen sich dadurch an der Innenseite der Fassung ab und zentrieren das optische Element in der Fassung. Der Durchmesser dieses Außenkreises des optischen Elements darf den Innendurchmesser der Fassung allerdings nicht zu weit überschreiten, da sonst beim Einsetzen des optischen Elements zu große Scherkräfte auf die Zentrierelemente wirken würden. Allerdings ist die zulässige Differenz zwischen dem Durchmesser des Außenkreises des optischen Elements und dem Innendurchmesser der Fassung auch von der Elastizität des für die Zentrierelemente verwendeten Materials abhängig. Ähnliches gilt selbstverständlich für das weiter oben beschriebene Ausführungsbeispiel, bei dem die Zentrierelemente an der Innenseite der Fassung angebracht sind. Hier muss ein um die Spitzen der Zentrierelemente gelegter Innenkreis einen etwas kleineren Durchmesser als die runde Linse aufweisen.

Bei einem Ausführungsbeispiel der Erfindung ist das optische Element mit einem Halteelement in der Fassung gesichert. Dieses Halteelement ist meist mit der Fassung verrastet und verhindert eine Verschiebung des optischen Elements entlang seiner optischen Achse. Quer zur optischen Achse wird das optische Element durch die Zentrierelemente in seiner zentrierten Stellung gehalten.

Bei einem anderen Ausführungsbeispiel wird das optische Element in der Fassung verklebt. Hierzu wird das optische Element zusammen mit den Zentrierelementen zuerst in die Fassung eingesetzt und dort in zentrierter Lage gehalten. In einem weiteren Schritt werden die Zwischenräume zwischen den einzelnen Zentrierelementen mit einem Kleber ausgefüllt. Nach dem Aushärten des Klebers ist das optische Element auch in Richtung seiner optischen Achse gesichert.

Erfindungsgemäß ist die Anzahl, Verteilung und/oder Größe der Zentrierelemente an die Art und Form des optischen Elementes angepasst. So benötigt beispielsweise eine kleine leichte Kunststofflinse weniger Zentrierelemente als eine große schwere Glaslinse, um in der zentrierten Stellung gehalten werden zu können. Auch ist z. B. bei rechteckigen optischen Elementen eine ungleichmäßige Anordnung der Zentrierelemente möglich. So kann es vorteilhaft sein, die optischen Zentrierelemente auf die Bereiche in der Nähe der Ecken zu konzentrieren. Grundsätzlich ist es aber auch möglich, ein optisches Element in eine Fassung einzusetzen, deren Form nicht genau der Form des optischen Elements entspricht. Um hier eine Passung zu erreichen muss die Größe der Zentrierelemente entsprechend angepasst werden.

Üblicherweise weisen optische Elemente, insbesondere runde Linsen, nur einen geringen, für die meisten Anwendungen vernachlässigbaren Zentrierfehler auf. In diesem Fall besitzen die Zentrierelemente alle die gleiche Größe. Ist der Zentrierfehler für eine spezielle Anwendung des optischen Bauteils jedoch zu groß, so wird die Größe der Zentrierelemente vorteilhaft so gestaltet, dass der Zentrierfehler des optischen Elements ausgeglichen wird. Die für diesen Zweck relevante Größe ist insbesondere die Höhe der Zentrierelemente.

Weitere Einzelheiten und Vorteile der Erfindung ergeben sich aus den Unteransprüchen im Zusammenhang mit der Beschreibung von Ausführungsbeispielen, die anhand der Zeichnungen eingehend erläutert werden.

Es zeigen:
- Fig. 1a-c: eine runde Linse mit als Micro-Noppen ausgebildeten Zentrierele- menten in verschiedenen Ansichten,
- Fig. 1d-e: ein erfindungsgemäßes optisches Bauteil mit der runden Linse nach Fig. 1a-c und einer Fassung in verschiedenen Schnitt-Darstellungen,
- Fig. 2a-c: eine Stablinse mit als Micro-Noppen ausgebildeten Zentrierelemen- ten in verschiedenen Ansichten,
- Fig. 2d-e: ein erfindungsgemäßes optisches Bauteil mit der Stablinse nach Fig. 2a-c und einer Fassung in verschiedenen Schnitt-Darstellungen,
- Fig. 3a: eine eckige Linse mit als Micro-Noppen ausgebildeten Zentrierele- menten und
- Fig. 3b-d: ein erfindungsgemäßes optisches Bauteil mit der eckigen Linse nach Fig. 3a und einer Fassung in verschiedenen Ansichten und einer Schnitt-Darstellung.

In den in der Zeichnung dargestellten Ausführungsbeispielen werden als optische Elemente verschiedene Linsen verwendet. Die Erfindung ist jedoch nicht nur auf Linsen beschränkt. Die Erfindung bezieht sich ebenso auf optische Bauteile, bei denen als optische Elemente Spiegel oder halbdurchlässige Spiegel, Prismen, usw. verwendet werden. Ebenso sind optische Elemente aus verschiedensten Materialien, so z. B. Glas, Kunststoff, Metall, etc. von der Erfindung betroffen.

Gleiche Teile werden im Folgenden mit gleichen Bezugszeichen versehen.

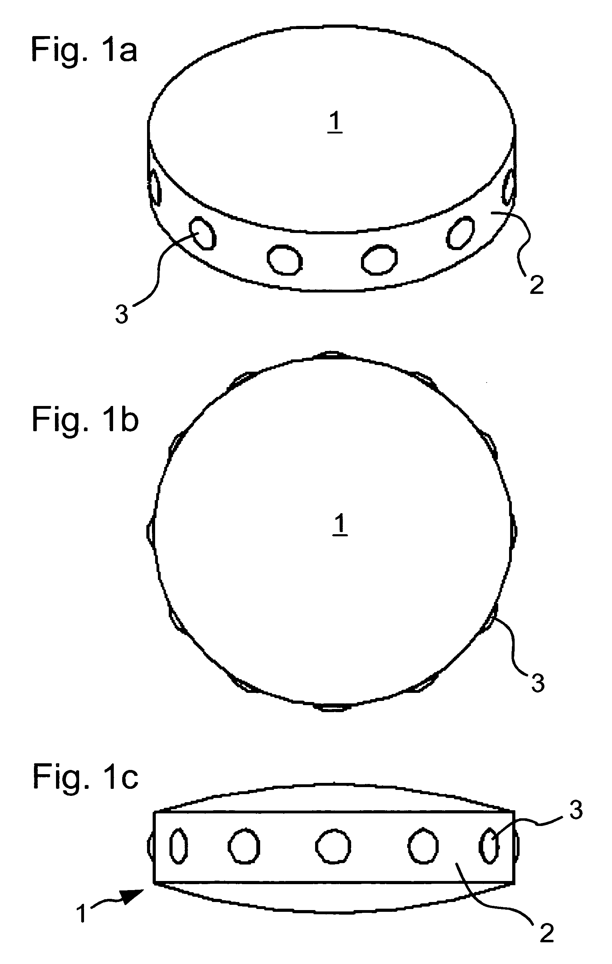

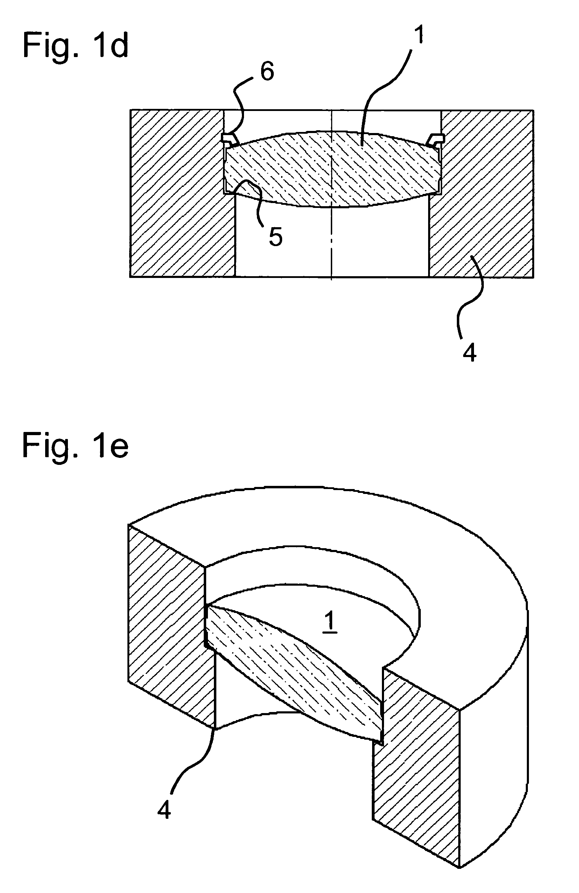

In Fig. 1 ist in Teildarstellungen und im Ganzen ein optisches Bauteil gezeigt, welches als optisches Element eine runde Linse 1 verwendet. Die Fig. 1a-1c zeigen die runde Linse 1 in verschiedenen Ansichten. Es spielt hier keine Rolle, ob die runde Linse 1 aus Glas oder aus Kunststoff gefertigt wurde. Der Außenumfang 2 der runden Linse 1 ist kreisförmig und mit geringen Toleranzen gearbeitet. Auf diesem Außenumfang 2 sind punktförmige Mikro-Noppen 3 als Zentrierelemente aufgebracht.

Die Mikro-Noppen 3 bestehen aus einem Acrylat- oder Silikon-Klebstoff, der über ein Jetventil aufgebracht wurde. Diese Methode gewährleistet eine große Reproduzierbarkeit, so dass auch die Mikro-Noppen 3 nur geringe Toleranzen aufweisen. Die Mikro-Noppen 3 sind sehr gleichmäßig auf dem Außenumfang 2 der runden Linse 1 verteilt.

Der Abstand zwischen zwei Mikro-Noppen 3 ist so ausgelegt, dass er größer als der Durchmesser einer Mikro-Noppe 3 ist. Bei sehr kleinen Linsen, mit einem Durchmesser von weniger als drei Millimeter, sollten wenigstens sechs punktförmige Mikro-Noppen auf den Außenumfang 2 aufgebracht werden. Der Durchmesser der Mikro-Noppen 3 kann entsprechend an den Durchmesser der runden Linse 1 angepasst werden.

Fig. 1d zeigt ein Ausführungsbeispiel des fertigen optischen Bauteils. Die runde Linse 1, mit den hier nicht sichtbaren Mikro-Noppen, ist in eine Fassung 4 eingesetzt. Durch die umlaufende Lagerstufe 5 entsteht ein Linsensitz, auf dem die runde Linse 1 aufliegt. Um die runde Linse 1 auf diesem Sitz zu halten, ist das Halteelement 6 vorgesehen. Er verhindert eine Verschiebung der runden Linse 1 in Richtung ihrer optischen Achse. Das Halteelement 6 kann als Federring ausgebildet sein und mit der Fassung 4 verrasten. Ebenso ist ein Verkleben des Halteelements 6 mit der Fassung 4 möglich. Durch die in Fig. 1d nicht sichtbaren Mikro-Noppen wird die runde Linse 1 in ihrer zentrierten Lage gehalten. Die runde Linse 1 bleibt auch bei einer Erwärmung oder Abkühlung des optischen Bauteils in ihrer zentrierten Lage. Von der Fassung 4 können keine Spannungen auf die runde Linse 1 übertragen werden, da evtl. auftretende Spannungen von den Zentrierelementen abgefangen werden. In Fig. 1e wurde das Halteelement 6 aus Übersichtlichkeitsgründen nicht dargestellt.

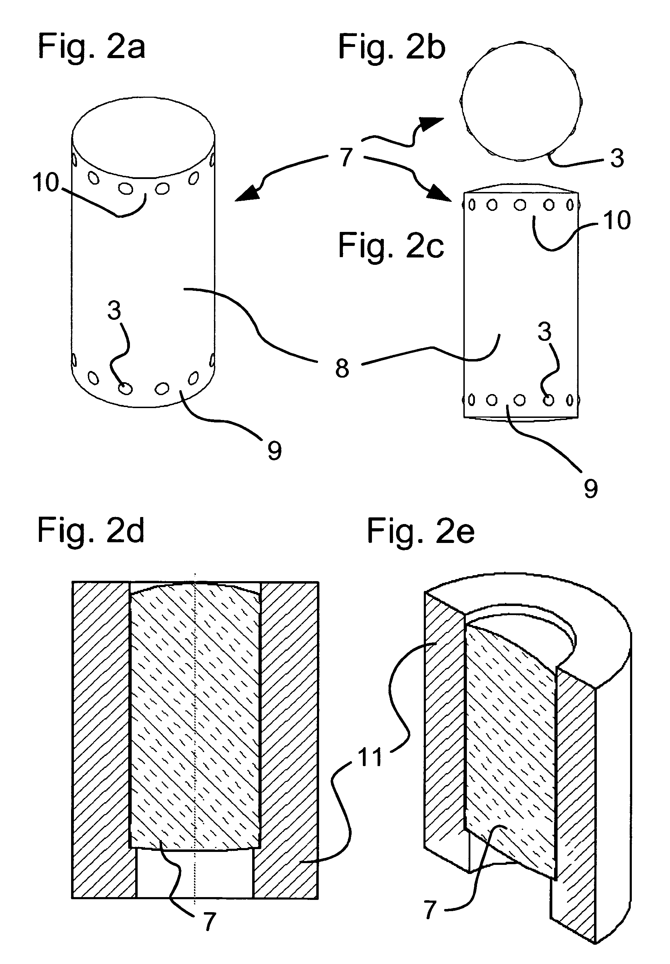

In Fig. 2a-2c ist eine Stablinse in mehreren Ansichten dargestellt. Auch hier sind als Zentrierelemente punktförmige Mikro-Noppen 3 auf dem Außenumfang 8 der Stablinse 7 aufgebracht. Es hat sich als unnötig erwiesen, die Mikro-Noppen 3 über den gesamten Außenumfang 8 der Stablinse 7 gleichmäßig zu verteilen. Es wurde daher am unteren Rand 9 und am oberen Rand 10 des Außenumfangs 8 der Stablinse 7 jeweils eine Reihe der punktförmigen Mikro-Noppen 3 aufgebracht. Diese beiden Reihen gewährleisten eine sichere Zentrierung der Stablinse 7, ohne dass weitere Mikro-Noppen zwischen den beiden Reihen aufgebracht werden müssten.

In den Fig. 2d und 2e ist wiederum das fertige optische Bauteil gezeigt. Die Stablinse 7 ist hier in die Fassung 11 eingesetzt. In den dargestellten Schnitten sind die Mikro-Noppen nicht zu erkennen. Aufgrund der engen Platzverhältnisse in der Fassung 11 oberhalb der Stablinse 7, wurde hier auf die Sicherung durch ein Halteelement verzichtet. Über hier nicht dargestellte Bohrungen in der Fassung 11, wurde stattdessen ein Kleber in den Spalt, zwischen der Stablinse 7 und der Innenwand der Fassung 11, eingefüllt. Vorteilhaft wurde hier ein UV-härtender Kleber verwendet, so dass eine schnelle Aushärtung, über eine Belichtung durch die Stablinse 7, erzielbar ist.

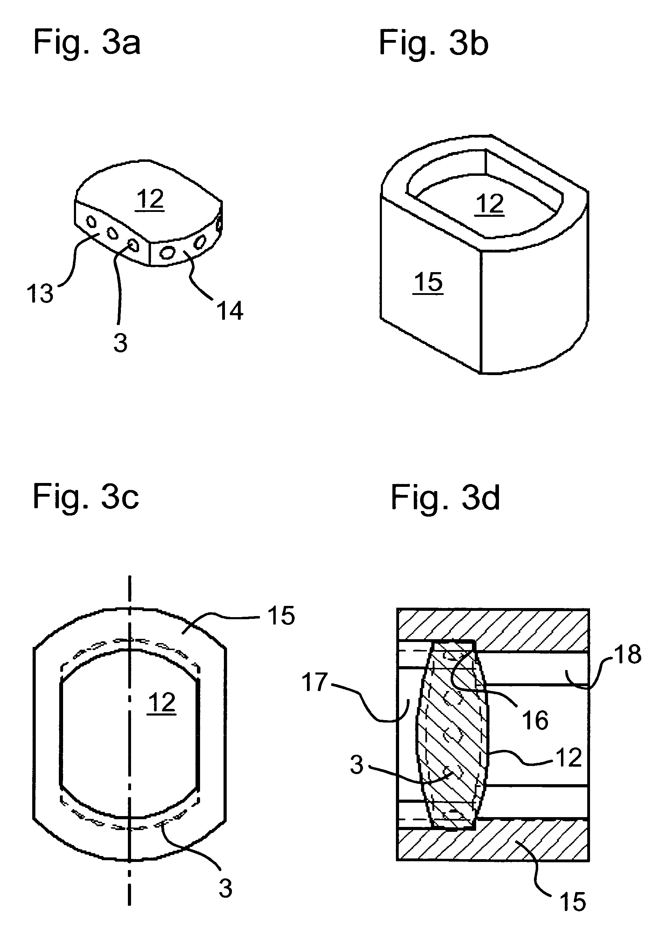

Um zu verdeutlichen, dass die Erfindung nicht nur bei runden optischen Elementen eingesetzt werden kann, wird in Fig. 3 ein optisches Bauteil mit einer eckigen Linse 12 gezeigt. Die gezeigte Form der Linse 12 ist allerdings nur als beispielhaft zu betrachten, da ebenso optische Bauteile mit beliebigen anderen Linsenformen, wie beispielsweise Keilformen oder Rechteckformen, möglich sind. Die hier gezeigte eckige Linse 12 ist so gearbeitet, dass ihr Außenumfang aus zwei geraden Abschnitten 13 und zwei gekrümmten Abschnitten 14 zusammengesetzt ist. Alle vier Abschnitte des Außenumfangs grenzen über Kanten aneinander. Sowohl die geraden Abschnitte 13, als auch die gekrümmten Abschnitte 14 sind mit jeweils drei Mikro-Noppen 3 versehen.

Die dazu passende eckige Fassung 15 weist dementsprechend zwei gerade Innenflächen 17 und zwei gekrümmte Innenflächen 18 auf. Eine Lagerstufe 16 ist ausschließlich in den gekrümmten Innenflächen 18 vorgesehen. Es entsteht so ein zweigeteilter Linsensitz. Die eckige Linse 12 liegt folglich nur auf der Lagerstufe 16 an den gekrümmten Innenflächen 18 der eckigen Fassung 15 auf. An den geraden Innenflächen 17 steht die eckige Linse 12 nur über die Mikro-Noppen 3 mit der Fassung 15 in Verbindung. Die eckige Linse 12 kann wiederum über eine Verklebung, wie bei der Stablinse 7 aus Fig. 2 beschrieben, oder über ein Halteelement, wie bei der runden Linse aus Fig. 1, auf dem Linsensitz gesichert sein.

Sollten statt der in den Ausführungsbeispielen gezeigten Linsen, beispielsweise Spiegel als optische Elemente eingesetzt werden, können diese selbstverständlich auch aus Metall gefertigt sein. Auch in diesem Fall ist eine Zentrierung der optischen Elemente über die punktförmigen Mikro-Noppen von Bedeutung.

### Bezugszeichenliste:

- 1: runde Linse
- 2: Außenumfang der runden Linse
- 3: punktförmige Micro-Noppen
- 4: runde Fassung
- 5: umlaufende Lagerstufe
- 6: Halteelement
- 7: Stablinse
- 8: Außenumfang der Stablinse
- 9: unterer Rand
- 10: oberer Rand
- 11: Stablinsenfassung
- 12: eckige Linse
- 13: gerader Abschnitt des Außenumfangs
- 14: gekrümmter Abschnitt des Außenumfangs
- 15: eckige Fassung
- 16: Lagerstufe
- 17: gerade Innenfläche
- 18: gekrümmte Innenfläche

## Patentansprüche

1. Optisches Bauteil mit einem, als kleine Linse realisierten, optischen Element (1; 7, 12), einer Fassung (4; 11; 15) und Zentrierelementen (3) zum Zentrieren des optischen Elements (1; 7; 12) in der Fassung (4; 11; 15), wobei die Zentrierelemente (3) an der Außenkontur (2; 8; 13, 14) des optischen Elements (1; 7; 12) angebracht und in einem Spalt zwischen dem optischen Element (1; 7; 12) und der Fassung (4; 11; 15) vorgesehen sind und wobei sich die Zentrierelemente (3) bei Raumtemperatur in einem komprimierten Zustand befinden, **dadurch gekennzeichnet, dass** die Zentrierelemente (3) punktförmig ausgebildet und kugelsegmentförmig gestaltet sind, einen Durchmesser von weniger als 1 mm aufweisen und die Höhe der Zentrierelemente (3) zu deren Durchmesser im Verhältnis 1 zu 4 bis 1 zu 15 steht.

2. Optisches Bauteil nach Anspruch 1, **dadurch gekennzeichnet, dass** die Zentrierelemente (3) auf den Außenumfang (2; 8; 13, 14) des fertigen optischen Elements (1; 7; 12) aufgebracht sind.

3. Optisches Bauteil nach Anspruch 2, **dadurch gekennzeichnet, dass** die Zentrierelemente (3) aus Kunststoff bestehen.

4. Optisches Bauteil nach Anspruch 3, **dadurch gekennzeichnet, dass** der Kunststoff ein reaktionsvernetzendes Polymer ist.

5. Optisches Bauteil nach Anspruch 4, **dadurch gekennzeichnet, dass** die Zentrierelemente (3) bei Raumtemperatur eine Shore-Härte zwischen A20 und D60 aufweisen.

6. Optisches Bauteil nach Anspruch 5, **dadurch gekennzeichnet, dass** die Zentrierelemente (3) berührend auf den Außenumfang (2; 8; 13, 14) des optischen Elements (1; 7; 12) aufgebracht sind.

7. Optisches Bauteil nach Anspruch 5, **dadurch gekennzeichnet, dass** die Zentrierelemente (3) berührungslos auf den Außenumfang (2; 8; 13, 14) des optischen Elements (1; 7; 12) aufgebracht sind.

8. Optisches Bauteil nach Anspruch 7, **dadurch gekennzeichnet, dass** die Zentrierelemente (3) mit einem Jetventil auf den Außenumfang (2; 8; 13, 14) des optischen Elements (1; 7; 12) aufgebracht sind.

9. Optisches Bauteil nach Anspruch 1, **dadurch gekennzeichnet, dass** das optische Element (1; 7; 12) mit den daran angebrachten Zentrierelementen (3) minimal größer als die Öffnung der Fassung (4; 11; 15) ist.

10. Optisches Bauteil nach Anspruch 1, **dadurch gekennzeichnet, dass** das optische Element (1) mit einem Halteelement (6) in der Fassung (4) gesichert ist.

11. Optisches Bauteil nach Anspruch 1, **dadurch gekennzeichnet, dass** das optische Element (7) mit einem Kleber in der Fassung (11) verklebt ist.

12. Optisches Bauteil nach Anspruch 1, **dadurch gekennzeichnet, dass** die Anzahl, Verteilung und/oder Größe der Zentrierelemente (3) an die Art und Form des optischen Elements (1; 7; 12) angepasst ist.

13. Optisches Bauteil nach Anspruch 12, **dadurch gekennzeichnet, dass** die Größe der Zentrierelemente (3) so gestaltet ist, dass ein Zentrierfehler des optischen Elements (1; 7; 12) ausgeglichen wird.

## Claims

1. Optical component comprising an optical element (1; 7, 12) in the form of a small lens, a mount (4; 11, 15) and centring elements (3) for centring the optical element (1; 7; 12) in the mount (4; 11; 15), wherein the centring elements (3) are attached to the outer contour (2; 8; 13, 14) of the optical element (1; 7; 12) and are provided in a gap between the optical element (1; 7; 12) and the mount (4; 11; 15) and wherein the centring elements (3) are in a compressed state at room temperature, **characterised in that** the centring elements (3) are configured to be point-like and have a spherical segment shape, a diameter of less than 1 mm and the height of the centring elements (3) relative to their diameter is in a ratio of 1 : 4 to 1 : 15.

2. Optical component according to claim 1, **characterised in that** the centring elements (3) are attached to the outer circumference (2; 8; 13, 14) of the fmished optical element (1; 7; 12).

3. Optical component according to claim 2, **characterised in that** the centring elements (3) are made of plastic.

4. Optical component according to claim 3, **characterised in that** the plastic is a reaction linking polymer.

5. Optical component according to claim 4, **characterised in that** the centring elements (3) at room temperature have a Shore hardness of between A20 and D60.

6. Optical component according to claim 5, **characterised in that** the centring elements (3) are attached making contact with the outer circumference (2; 8; 13, 14) of the optical element (1; 7; 12).

7. Optical component according to claim 5, **characterised in that** the centring elements (3) are attached without making contact onto the outer circumference (2; 8; 13, 14) of the optical element (1; 7; 12).

8. Optical component according to claim 7, **characterised in that** the centring elements (3) are attached with a jet valve onto the outer circumference (2; 8; 13, 14) of the optical element (1; 7; 12).

9. Optical component according to claim 1, **characterised in that** the optical element (1; 7; 12) with the centring elements (3) attached thereto is minimally larger than the opening of the mount (4; 11; 15).

10. Optical component according to claim 1, **characterised in that** the optical element (1) is secured by a holding element (6) into the mount (4).

11. Optical component according to claim 1, **characterised in that** the optical element (7) is adhered into the mount (11) by an adhesive.

12. Optical component according to claim 1, **characterised in that** the number, distribution and/or size of the centring elements (3) is adjusted to the type and form of the optical element (1; 7; 12).

13. Optical component according to claim 12, **characterised in that** the size of the centring elements (3) is such that a centring error of the optical element (1; 7; 12) is balanced out.

## Revendications

1. Composant optique comprenant un élément optique (1 ; 7 ; 12) réalisé sous la forme d'une petite lentille, une monture (4 ; 11 ; 15) et des éléments de centrage (3) pour centrer l'élément optique (1 ; 7 ; 12) dans la monture (4 ; 11 ; 15), sachant que les éléments de centrage (3) sont disposés sur le contour extérieur (2 ; 8 ; 13, 14) de l'élément optique (1 ; 7 ; 12) et sont prévus dans une fente entre l'élément optique (1 ; 7 ; 12) et la monture (4 ; 11 ; 15), et sachant que les éléments de centrage (3) se trouvent dans un état comprimé à température ambiante, **caractérisé en ce que** les éléments de centrage (3) sont réalisés ponctuels sous forme de segments sphériques et présentent un diamètre inférieur à 1 mm, et la hauteur des éléments de centrage (3) se trouve dans un rapport allant de là 4 jusqu'à 1 à 15 relativement à leur diamètre.

2. Composant optique selon la revendication 1, **caractérisé en ce que** les éléments de centrage (3) sont mis en place sur la périphérie extérieure (2 ; 8 ; 13, 14) de l'élément optique achevé (1 ; 7 ; 12).

3. Composant optique selon la revendication 2, **caractérisé en ce que** les éléments de centrage (3) sont réalisés en matière plastique.

4. Composant optique selon la revendication 3, **caractérisé en ce que** la matière plastique est un polymère à réticulation réactive.

5. Composant optique selon la revendication 4, **caractérisé en ce que** les éléments de centrage (3) présentent à température ambiante une dureté Shore comprise entre A20 et D60.

6. Composant optique selon la revendication 5, **caractérisé en ce que** les éléments de centrage (3) sont mis en place en contact physique sur la périphérie extérieure (2 ; 8 ; 13, 14) de l'élément optique (1 ; 7 ; 12).

7. Composant optique selon la revendication 5, **caractérisé en ce que** les éléments de centrage (3) sont mis en place sans contact sur la périphérie extérieure (2 ; 8 ; 13, 14) de l'élément optique (1 ; 7 ; 12).

8. Composant optique selon la revendication 7, **caractérisé en ce que** les éléments de centrage (3) sont mis en place par une soupape jet sur la périphérie extérieure (2 ; 8 ; 13, 14) de l'élément optique (1 ; 7 ; 12).

9. Composant optique selon la revendication 1, **caractérisé en ce que** l'élément optique (1 ; 7 ; 12), avec les éléments de centrage (3) installés sur lui, est minimalement plus grand que l'ouverture de la monture (4 ; 11 ; 15).

10. Composant optique selon la revendication 1, **caractérisé en ce que** l'élément optique (1) est assujetti dans la monture (4) par un élément de maintien (6).

11. Composant optique selon la revendication 1, **caractérisé en ce que** l'élément optique (7) est collé par une colle dans la monture (11).

12. Composant optique selon la revendication 1, **caractérisé en ce que** le nombre, la répartition et/ou la taille des éléments de centrage (3) sont adaptés au type et à la forme de l'élément optique (1 ; 7 ; 12).

13. Composant optique selon la revendication 12, **caractérisé en ce que** la taille des éléments de centrage (3) est conçue de manière à compenser un défaut de centrage de l'élément optique (1 ; 7 ; 12).
